# EUROPEAN PATENT SPECIFICATION

(11) **EP 1 346 906 B1**
(45) Date of publication and mention of the grant of the patent: **05.10.2005**
(21) Application number: 03005076.9
(22) Date of filing: 07.03.2003
(51) Int. Cl.: B62J 17/06

(54) **Element of thermal protection and/or protection from rainstorm for motorcyclists**
Thermisches Schutzelement und/oder Regenschutz für Motorradfahrer
Elément à protection thermique et/ou protection contre la pluie pour motocyclistes

(30) Priority: 11.03.2002 IT MI20020131 U
(43) Date of publication of application: 24.09.2003
(73) Proprietor: Tucano Urbano S.r.l., 20121 Milan (IT)
(72) Inventor: Colombo, Francesco, 20123 Milan (IT); Lurani, Nicolò, 20123 Milan (IT); Bertolotti, Claudia, 24044 Dalmine (BG) (IT)
(74) Representative: Marietti, Giuseppe

(56) References cited:
- DE-A- 4 029 261
- DE-A- 4 029 284
- DE-C- 942 791
- DE-U- 7 822 139
- GB-A- 2 360 263

## Description

The present invention concerns an element of thermal protection and/or protection against inclement weather (e.g. rainstorm) for users of motorcycles, of the type comprising a flexible cover which the user of the vehicle can use as a screen for parts of his body and a means securing said cover to the vehicle in such a way that it can be removed.

The increase of urban traffic and the difficulty of parking motor vehicles in towns have for some time led to an ever growing use of motorcycles, and particularly of mopeds (or scooters), as a preferential means of urban transport. In fact, the agility and the reduced dimensions of mopeds, their increased autonomy and load-bearing capacity, make these means of transport extremely practical and versatile in use, even though they oblige the user to suffer considerable discomfort when the atmospheric conditions are not optimal.

In order to allow the use of motorcycles even during the winter months or in inclement weather, it is common practice to equip the motorcycle with protective elements fixed to the chassis or to the bodywork, usually in a removable fashion, with the function of shielding the user of the motor vehicle from the external environment in such a way as to exert an effective action of thermal protection of the user and/or protection against inclement weather.

Among the most versatile and efficacious protection elements known to the prior art, there are those (see for instance GB-A-2 360 263) composed of a flexible cover, of waterproof and thermally insulating material, which, equipped with means for fastening them to the motor vehicle, allow parts of the motorcyclist's body to be covered, either the rider or the passenger.

The flexible cover is usually fixed to the motorcycle at the front, and extends towards the tail of the motorcycle, along the saddle, so that, during use, the user can put himself at least partly under the cover.

In particular, this cover usually comprises two side flaps located corresponding to the sides of the motorcycle, to protect the motorcyclist's legs, ad a central portion connecting said side flaps suited for covering the lower part of the motorcyclist's bust and for guaranteeing the continuity of the same protection element.

The realisation of the flexible cover with several layers of synthetic material, one on top of the other, including for example polypropylene, when the cover is in its operative position shielding the motorcyclist, allows not only a more efficacious thermal insulation and a more valid protection against atmospheric agents, but also good mechanical resistance of the protection element against any external stress.

To facilitate use by motorcyclists, the flexible cover is also shaped in such a way as to present at least one flap not attached to the motorcycle, which can be shifted when the motorcyclist intends to get under the cover. In particular, the front part of the cover is fastened with laces and/or hooks to a front structural element of the motorcycle, while the portion of the cover that extends towards the tail of the motorcycle, corresponding to or near to the saddle, is instead left free so that the motorcyclist can shift the cover, sit on the saddle and position the cover so that it protects his lower limbs.

However, the presence in the flexible cover of a flap that is not secured to the motor vehicle, or even of the entire rear portion of the flexible cover, means that, when the motorcycle is moving, the impinging air flow causes the free flap of the cover to swing and therefore to lost the covering position desired by the user. As the speed of the motorcycle increases, the vibration of the free flap in the impinging air flow becomes more and more consistent.

This means that, during forward movement of the motorcycle, the free flap tends to move away from the motorcyclist's body and consequently to allow air flow, or even rain, to get under the cover, losing the thermal insulation and the protection against inclement weather which the cover ought to guarantee.

To avoid this effect, it is common practice to fix tapes on this free flap of the cover, corresponding to one of its edges, so that these tapes can be tied to the motorcycle, after the cover has been arranged over the limbs of the motorcyclist, to keep the flexible cover in position. In particular, these tapes, or ribbons, can be placed between the saddle and the motorcyclist's body and held down by the motorcyclist's own weight, so that the cover is kept lying over his lower limbs.

This solution, however, has revealed that it is not always able to guarantee that the cover is impermeable to water and air which impinge the motorcycle and is also particularly uncomfortable for the motorcyclist, who is forced to adopt unnatural positions to block the tapes.

Moreover, in the case of frequent stops, such as occur especially in urban use of the motor vehicle, the motorcyclist shifts his centre of gravity and consequently tends to shift the tapes with respect to the saddle; this makes it necessary to adjust the position of the tapes often to prevent their becoming slack and making the protection element ineffective.

Finally, in the case of storms or rain, the operations necessary to arrange the tapes can allow water to get in under the flexible cover onto the saddle, to the considerable discomfort of the motorcyclist.

It is an aim of the present invention to realise an element of thermal protection and/or protection against inclement weather for users of motorcycles of the type comprising a flexible cover which can be secured to the motorcycle, which does not present the inconvenient aspects of the prior art.

Another aim of the present invention is to provide an element of thermal protection and/or protection against inclement weather for motorcyclists which is extremely easy to arrange in its operative position and which during movement of the vehicle is not shifted by the action of the impinging air flow.

A further aim of the present invention is to realise an element of thermal protection and/or protection against inclement weather in which the thermal insulation is better than that offered by the protection elements of the prior art.

These and other aims are achieved by the present invention as stated in the first independent claim and in the subsequent dependent claims.

The element of thermal protection and/or protection against inclement weather for motorcycle users according to the present invention comprises at least one flexible cover that can be associated with parts of the body of a user and means for securing the flexible cover to the motorcycle in such a way that it can be removed.

Moreover, the flexible cover comprises at least one portion having one or more chambers.

In a preferred embodiment said portion of the cover comprises two separable layers which define said one or more chambers.

Moreover, according to a particular aspect of the present invention, at least one of the chambers with which the flexible cover is provided can be inflated with air or can be filled with a section of synthetic material, for example polystyrene foam, polyethylene foam or other foam polymer.

According to another aspect of the present invention, the cover presents two slide flaps located, during use, corresponding to the two sides of the motorcycle, and on one or both of said side flaps is located at least one of the aforesaid chambers.

In a preferential embodiment of the present invention, the portion with two separable layers which define one or more chambers is located on a rear part of the cover, corresponding to the saddle of the motor vehicle.

The embodiment with chambers in the flexible cover in which may be housed a fluid, such as air, or an insulating synthetic material, not only increases the thermal insulation of the cover in the area corresponding to the chambers, but also contributes to stiffening and shaping the flexible cover itself. Surprisingly, above all when said chambers are located corresponding to the lower edge of the side flaps of the cover, it has been found that this stiffening prevents or reduces the effect of the impinging air flow on the flexible cover, stabilising the latter during movement of the vehicle, without being uncomfortable for the user.

Illustrated below, purely as examples without limitation, are some embodiments of the present invention, with reference to the enclosed figures, in which
figure 1 is a side view of a motorcycle equipped with a protection element according to a preferential embodiment of the present invention;
figure 2 is a side view of another motorcycle on which is fastened a protection element according to a further aspect of the present invention;
figure 3 is a sectioned front view of a protection element of a preferred embodiment;
figure 4 is a side view of a detail of a protection element according to another aspect of the present invention;
figure 5 is a side view of a detail of a protection element according to a different aspect of the present invention;
figure 6 is a sectioned front view of another detail of an alternative embodiment of the present invention;
figure 7 shows an overhead view of a further embodiment of the present invention; and
figure 8 is a schematic overhead layout view of a protection element according to another aspect of the present invention.

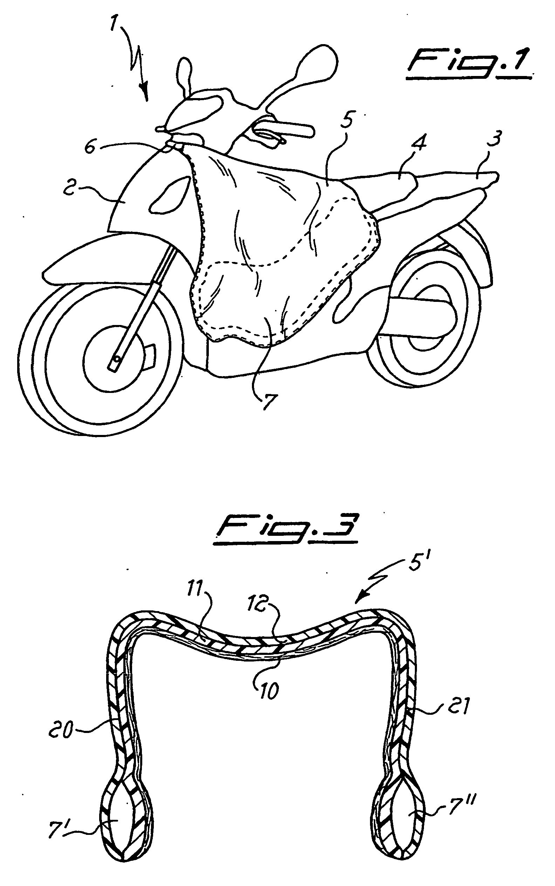

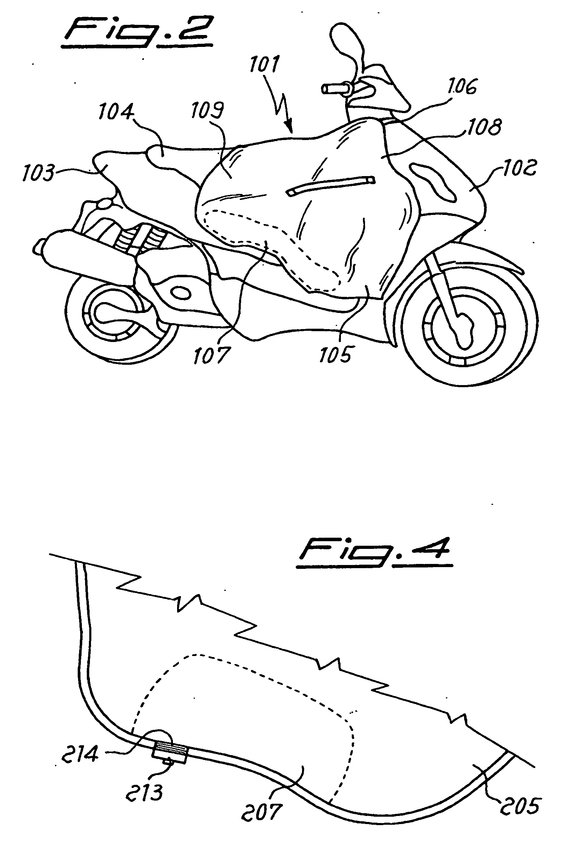

With reference to figures 1 and 2, the element of thermal protection and/or protection against inclement weather according to the present invention comprises a flexible cover 5, 105, made of insulating and waterproof material, and means 6, 106 for fastening to a structural element of a motorcycle 1, 101. The flexible cover 5, 105, extends from the front part 2, 102 (the front shield) of the motorcycle 1, 101 towards the tail 3, 103, at least partly involving the saddle 4, 104, in such a way that it can protect, by shielding them, the lower limbs of a motorcyclist.

The fastening means 6, 106 secure the cover 5, 105 to the front part 2, 102, of the motorcycle 1, 101, in a removable fashion with hooks and/or straps, in such a way that the same cover 5, 105 can be shifted by the user of the motorcycle in order to use the protection element itself. In greater detail, with reference to figure 2, the front part 108 of the cover 105 is secured in a removable fashion to the front shield 102 of the motorcycle 101, while the rear part 109 extends corresponding to the saddle 104 and is free to be shifted and positioned by the user, when the latter intends to use the vehicle.

According to the present invention, moreover, the flexible cover 5, 105 comprises at least one portion equipped with at least one chamber 7, 107. In particular, according to the embodiment shown in figure 1, the chamber 7 extends substantially corresponding to the whole lower edge of each side portion (flap) of the cover 5, while, in the embodiment in figure 2, the chamber 107 extends corresponding to the rear part 109 of the cover 107, substantially near the bottom side edge of the latter.

In an embodiment not illustrated, the chamber 7 or 107 can have dimensions such as to coincide substantially with the entire extension of the cover 5, 105.

The chamber 7, 107 can also be directly filled with a fluid, such as air, or with a suitably shaped insulating material, such as polystyrene foam.

Depending on the filling material and on the conformation and arrangement in which it is made, each chamber 7, 107, which may project or not from the external surface of the cover 5, 105, gives particular rigidity and thermal insulation to portions of the 5, 105.

In fact, the presence of chambers 7, 107 in the cover 5, 105, located corresponding to the position assumed by the limbs of the motorcyclist during movement of the vehicle and filled with a fluid or with an insulating material, increases the thermal insulation that the cover 5, 105 guarantees to the motorcyclist.

Moreover, surprisingly, the presence of said chambers 7, 107, above all if located corresponding to the bottom rear edge of the side flaps of the cover 5, 105, guarantees a high stability of the same cover 5, 105 during movement of the motorcycle 1, 101, thanks to the fact that said chambers become elements of structural stiffening of the flexible cover 5, 105 and to the outline that the same cover assumes with respect to the impinging air flow.

For example, by simply inserting air in these side chambers 7, 107, the latter become an element of stiffening and of further insulation of the flexible cover 5, 105 which determines a considerable reduction of the vibrations to which the rear portion 109 of the cover 5, 105 is subject during movement and an increase of the thermal insulation of the same cover 5, 105 with respect to the motorcyclist.

The reduction of the vibrations to which the rear portion 109 of the cover 5, 105 is subject is such as to make unnecessary, or at least of little importance, the presence of tapes for securing said rear part tale 109 to the motorcycle during use of the cover 5, 105 itself.

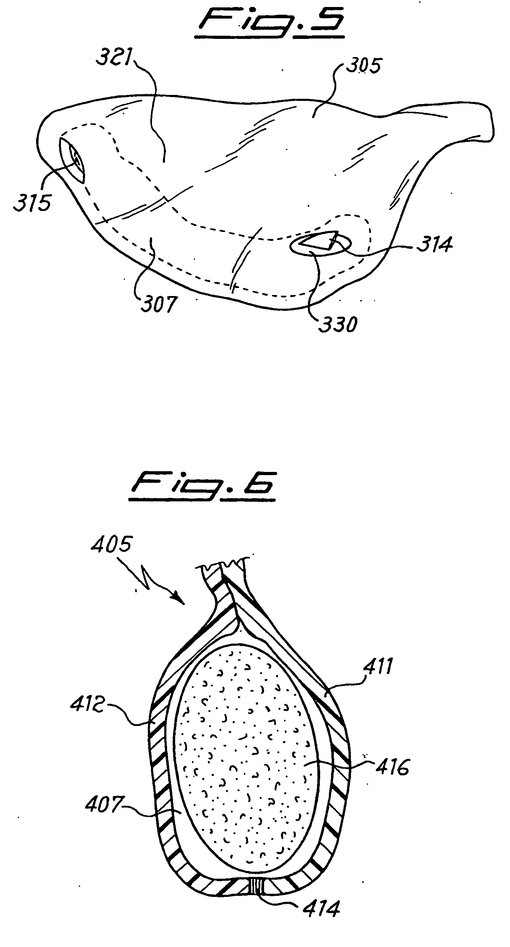

Figure 3 illustrates another preferential embodiment of the present invention. The flexible cover 5', which comprises two side flaps 20, 21 and a top part 22 for connecting said flaps, is composed of an internal layer 10, usually of synthetic fur, and of two bonded outer layers 11,12.

The external layers, for example of polypropylene or of polyamide fabric with an external layer ("spread") of PVC or polyurethane, guarantee thermal insulation and impermeability, and are separate from each other in the area corresponding to the lower portions of the side flaps 20, 21 so as to form two chambers 7' and 7", each on one flap 20, 21.

This embodiment is particularly simple to produce and guarantees high performances of the protection element according to the present invention.

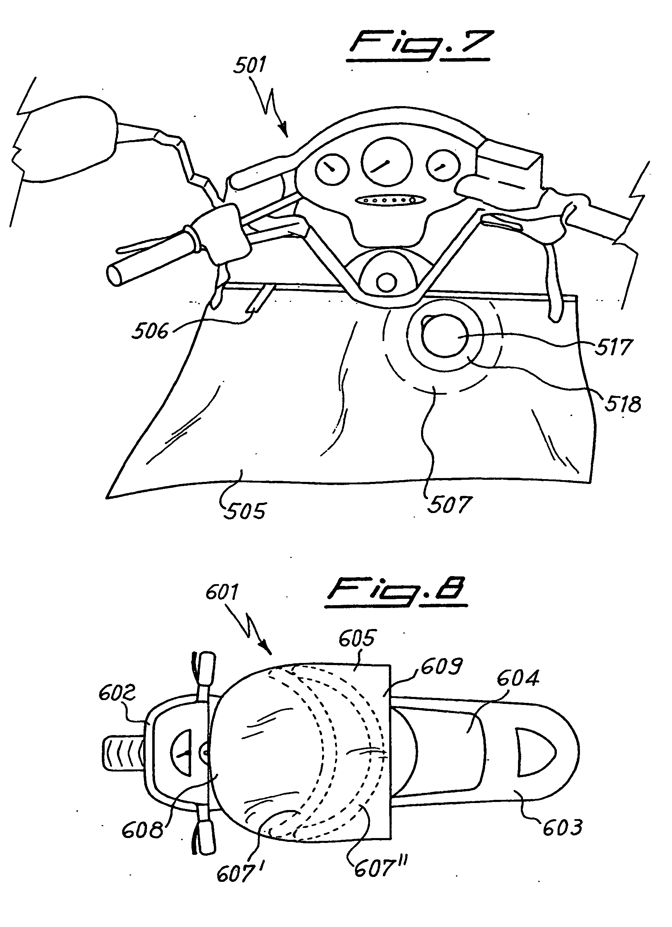

With reference to figure 4, the cover 205, according to another peculiar aspect of the present invention, can comprise a chamber 207, fluid-sealed and provided with an opening 214 communicating with the external environment which, in turn, presents a closing valve 213. By means of the valve 213, the chamber 207 can be filled with any fluid, for example compressed air, directly by the user of the motorcycle.

Figure 5 illustrates an embodiment of the present invention which has proved to be extremely useful as regards the stability of the cover during movement of the motorcycle.

The flexible cover 305, of which figure 5 shows a side flap 321, comprises a chamber 307 having an entrance opening 314 and an exit opening 315 for the air flow φ which impinges during advance movement of the motor vehicle. The air flow within the chamber 307 tends to inflate the chamber 307 itself and to stiffen the portion of the cover 305 corresponding to the latter, in such a way as to guarantee the stability of the cover 305, or rather of the side flap 321, during movement.

The exit opening 315 has preferably an outflow section considerably smaller than the outflow section if the entrance opening 314 and, in an embodiment not shown, the exit opening 315 can coincide with the holes made for the stitching of the same chamber 307.

Moreover, in the particular embodiment in figure 5, the entrance opening 314 comprises an access inlet for impinging air fixed to a disc 330 which may be stitched on corresponding to an access opening (or hole) to the chamber 307, in such a way as to guarantee fluid continuity between the access opening and the chamber 307 itself.

Likewise, by symmetry, also the other side flap of the cover 305 (not illustrated) is provided with a chamber completely similar to the chamber 307, comprising an entrance opening for the impinging air flow φ which opens corresponding to the front portion of the motorcycle (and therefore of the cover 305) and an exit opening located corresponding to the rear portion of the cover 305.

Figure 6 is a schematic sectioned representation of a further embodiment of the present invention. The flexible cover 405 is composed of two insulating and waterproof layers 411 and 412 (for example variously charged polypropylene) which, in the area corresponding to a bottom edge of the same cover 405, define at least one chamber 407 provided with an opening 414 communicating with the external environment. Located inside the chamber 407 is a body 416 made of insulating material, for example polystyrene foam or other foam polymer, and shaped in such a way as to adapt to the internal volume of the same chamber 407. The body 416 may be inserted in and removed from the chamber 407 thanks to the opening 414.

Alternatively, the body 416 may be a removable air chamber which is inflated outside the flexible cover 405, and is then inserted in the chamber 407 by the user.

Figure 7 shows an embodiment of the present invention which highlights a further advantage of the latter.

The illustrated element of thermal protection and/or protection against inclement weather comprises a flexible cover 505 and means 506 for securing the cover 505 to a motorcycle 501. The flexible cover 505 comprises a seat 518 provided with a closable flap 517, within which is located a part for operating the motor vehicle, for example the ignition.

According to a particular aspect of the present invention, the flexible cover 505 comprises a chamber 507, suitably filled with air or with an insulating material, located around the seat 518. The chamber 507, which in the illustration in figure 7 is ring-shaped and entirely surrounds the seat 518, has the purpose of stiffening the portion adjacent to the seat 518 to keep it convex and thus prevent the portion of the cover 505 around the seat 518 from becoming concave, which may allow the accumulation and entrance of water into the same seat 518.

Another purpose of said conformation of the chamber 507 is to protect the motorcycle part 501, housed in the seat 517, against accidental impact or involuntary operation of the part by the user of the motor vehicle 501.

Figure 8 shows another embodiment of the present invention, in which the protection element comprises a cover 605 provided with two chambers 607' and 607". The cover 605 extends from the front 602 to the rear 603 of the motorcycle 601 and partially covers the saddle 604, while the two chambers 607' and 607" transversely surround the whole cover 605, that is each one of them extends continuously from one side to the other of the cover 605, in such a way as to protect also the front of the user of the motorcycle 601. The two chambers 607, 607' can also be reciprocally connected and can extend from the front portion 608 to the rear portion 609 of the cover 605.

## Claims

1. Element of thermal protection and/or protection against inclement weather for motorcyclists, said element comprising at least one flexible cover (5; 5'; 105, 205; 305; 405) that can be associated with parts of the body of a user and means (6; 106) for securing the flexible cover to the motorcycle (1) in such a way that it can be removed, said flexible cover having at least one free flap (20, 21; 321) which is not to be secured to the motorcycle and which is shiftable when the user intends to get under the cover, said element being **characterised in that** said at least one free flap comprises at least one portion having one or more chambers (7; 7', 7"; 107; 207; 307; 407).

2. Element according to claim 1, **characterised in that** said at least one portion comprises two separable layers (11, 12; 411, 412) which define said one or more chambers.

3. Element according to claim 1 or 2, **characterised in that** at least one of said one or more chambers is provided with a port or opening (214; 314, 315) communicating with the external environment.

4. Element according to claim 3, **characterised in that** said communicating opening (214) presents a closing valve (213) for inflating said at least one chamber with a fluid.

5. Element according to claim 4, **characterised in that** said fluid is air.

6. Element according to claim 1, 2 or 3, **characterised in that** at least one of said one or more chambers has at least one entrance opening (314) and at least one exit opening (315) for an air flow which impinges during movement of the motorcycle.

7. Element according to claim 6, wherein said entrance opening comprises an air access inlet fixed to a disc (330) that can be connected on the outside to said at least one chamber, to allow the inflow of impinging air from the access opening into said at least one chamber.

8. Element according to claim 1, **characterised in that** at least one of said one or more chambers contains a synthetic insulating material.

9. Element according to claim 8, **characterised in that** said material is a polymer foam.

10. Element according to claim 1, **characterised in that** at least one of said one or more chambers contains an extractable air chamber.

11. Element according to any one of the previous claims, wherein said flexible cover comprises two side free flaps located, during use, corresponding to the two sides of the motorcycle, and **characterised in that** it comprises on one or both of said side free flaps at least one of said one or more chambers.

12. Element according to claim 11, wherein each of said side free flaps presents a bottom edge and **characterised in that** said at least one chamber is located corresponding to said bottom edge.

13. Element according to any one of the previous claims, wherein said means for securing said cover to the motorcycle in such a way that it can be removed are located on a front part of the cover to fix said front part to any front component of the motorcycle and **characterised in that** said at least one portion having one or more chambers is located on a rear part of said cover.

## Patentansprüche

1. Element zum Wärmeschutz und/oder für den Schutz gegen unfreundliches Wetter für Motorradfahrer, umfassend wenigstens eine elastische Abdeckung (5; 5'; 105, 205; 305; 405), die mit Teilen des Körpers eines Benutzers verbunden werden kann, sowie Hilfsmittel (6; 106) zur Befestigung der elastischen Abdeckung am Motorrad (1) in einer Weise, dass diese abgenommen werden kann, wobei die elastische Abdeckung wenigstens eine freie Lasche (20, 21; 321) aufweist, die nicht am Motorrad befestigt werden soll und verschoben werden kann, wenn der Benutzer beabsichtigt, unter die Abdeckung zu gelangen, **dadurch gekennzeichnet, dass** die wenigstens eine freie Lasche wenigstens einen Teil umfasst, der eine oder mehrere Kammern (7; 7', 7"; 107; 207; 307; 407) aufweist.

2. Element nach Anspruch 1, **dadurch gekennzeichnet, dass** der wenigstens eine Teil zwei trennbare Schichten (11, 12; 411, 412) umfasst, die eine oder mehrere Kammern definieren.

3. Element nach Anspruch 1 oder 2, **dadurch gekennzeichnet, dass** wenigstens eine der einen oder mehreren Kammern mit einem Schlitz oder einer Öffnung (214; 314, 315) versehen ist, der/die mit der äußeren Umgebung kommuniziert.

4. Element nach Anspruch 3, **dadurch gekennzeichnet, dass** die kommunizierende Öffnung (214) ein Schließventil (213) zum Aufblasen der wenigstens einen Kammer mit einem Fluid aufweist.

5. Element nach Anspruch 4, **dadurch gekennzeichnet, dass** das Fluid Luft ist.

6. Element nach Anspruch 1, 2 oder 3, **dadurch gekennzeichnet, dass** wenigstens eine der einen oder mehreren Kammern wenigstens eine Eintrittsöffnung (314) und wenigstens eine Austrittsöffnung (315) für einen Luftstrom aufweist, der bei Bewegung des Motorrads auftrifft.

7. Element nach Anspruch 6, wobei die Eintrittsöffnung einen Luftzutrittseihlass umfasst, der an einer Scheibe (330) befestigt ist, die außen an der wenigstens einen Kammer angeschlossen werden kann, so dass die auftreffende Luft von der Zutrittsöffnung in die wenigstens eine Kammer einströmen kann.

8. Element nach Anspruch 1, **dadurch gekennzeichnet, dass** wenigstens eine der einen oder mehreren Kammern ein synthetisches isolierendes Material enthält.

9. Element nach Anspruch 8, **dadurch gekennzeichnet, dass** das Material ein Polymerschaum ist.

10. Element nach Anspruch 1, **dadurch gekennzeichnet, dass** wenigstens eine der einen oder mehreren Kammern eine herausziehbare Luftkammer enthält.

11. Element nach einem der vorstehenden Ansprüche, wobei die elastische Abdeckung zwei seitliche freie Laschen umfasst, die sich bei Gebrauch entsprechend den beiden Seiten des Motorrads befinden, **dadurch gekennzeichnet, dass** es auf einer oder beiden der seitlichen freien Laschen wenigstens eine der einen oder mehreren Kammern umfasst.

12. Element nach Anspruch 11, wobei jede der seitlichen freien Laschen einen unteren Rand aufweist, **dadurch gekennzeichnet, dass** wenigstens eine Kammer entsprechend dem unteren Rand angeordnet ist.

13. Element nach einem der vorstehenden Ansprüche, wobei sich die Hilfsmittel zur Befestigung der Abdeckung am Motorrad in einer Weise, dass diese abgenommen werden kann, an einem vorderen Teil der Abdeckung befinden, um den vorderen Teil an irgendeinem vorderen Bauteil des Motorrads zu befestigen, **dadurch gekennzeichnet, dass** sich wenigstens ein Teil mit einer oder mehreren Kammern an einem hinteren Teil der Abdeckung befindet.

## Revendications

1. Elément à protection thermique et/ou protection contre la pluie pour motocyclistes, ledit élément comprenant au moins une couverture flexible (5 ; 5' ; 105, 205 ; 305; 405) qui peut être associée à des parties du corps d'un utilisateur et des moyens (6 ; 106) de fixation de la couverture flexible à la moto (1), de façon à pouvoir être retirée, ladite couverture flexible possédant au moins une patte libre (20, 21 ; 321) qui ne doit pas être fixée à la moto et qui peut être retirée lorsque l'utilisateur veut se mettre sous la couverture, ledit élément étant **caractérisé en ce que** ladite au moins une patte libre comprend au moins une partie ayant une ou plusieurs chambres (7 ; 7', 7" ; 107 ; 207 ; 307 ; 407).

2. Elément selon la revendication 1, **caractérisé en ce que** ladite au moins une partie comprend deux couches séparables (11, 12 ; 411, 412) qui définissent lesdites une ou plusieurs chambres.

3. Elément selon la revendication 1 ou 2, **caractérisé en ce qu'**au moins une desdites chambres est munie d'un orifice ou d'une ouverture (214 ; 314, 315) communiquant avec l'environnement extérieur.

4. Elément selon la revendication 3, **caractérisé en ce que** ladite ouverture de communication (214) présente une valve à fermeture (213) pour gonfler ladite au moins une chambre avec un fluide.

5. Elément selon la revendication 4, **caractérisé en ce que** le fluide est de l'air.

6. Elément selon la revendication 1, 2 ou 3, **caractérisé en ce qu'**au moins une desdites chambres comporte au moins une ouverture d'entrée (314) et au moins une ouverture de sortie (315) pour un flux d'air qui arrive durant le déplacement de la moto.

7. Elément selon la revendication 6, dans lequel ladite ouverture d'entrée comprend une entrée d'accès d'air fixée à un disque (330) qui peut être relié, à l'extérieur, à ladite au moins une chambre, pour permettre l'introduction de l'air arrivant depuis l'ouverture d'accès dans ladite au moins une chambre.

8. Elément selon la revendication 1, **caractérisé en ce qu'**au moins une desdites chambres contient un matériau isolant synthétique.

9. Elément selon la revendication 8, **caractérisé en ce que** ledit matériau est une mousse de polymère.

10. Elément selon la revendication 1, **caractérisé en ce qu'**au moins une desdites chambres contient une chambre à air extractible.

11. Elément selon l'une quelconque des revendications précédentes, dans lequel ladite couverture flexible comprend deux pattes libres latérales situées, durant l'utilisation, de façon correspondant aux deux flancs de la moto, et **caractérisé en ce qu'**il comprend, sur une ou sur les deux pattes libres latérales, au moins l'une desdites chambres.

12. Elément selon la revendication 11, dans lequel chacune desdites pattes libres latérales présente un bord inférieur et **caractérisé en ce que** ladite au moins une chambre est située de façon correspondant audit bord inférieur.

13. Elément selon l'une quelconque des revendications précédentes, dans lequel lesdits moyens de fixation de ladite couverture à la moto de façon à pouvoir être retirée sont situés sur une partie avant de la couverture pour fixer ladite partie avant à un composant avant quelconque de la moto et **caractérisé en ce que** ladite au moins une partie comportant une ou plusieurs chambres est située sur une partie arrière de ladite couverture.
